# EUROPÄISCHE PATENTSCHRIFT

(11) **EP 0 540 592 B1**
(45) Veröffentlichungstag und Bekanntmachung des Hinweises auf die Patenterteilung: **18.05.1994**
(21) Anmeldenummer: 91913343.9
(22) Anmeldetag: 24.07.1991
(51) Int. Cl.: C08J 7/14, B01D 71/68

(54) **VERFAHREN ZUR CHEMISCHEN, HYDROPHIL-ANIONISCHEN MODIFIZIERUNG VON OBERFLÄCHEN VON FORMKÖRPERN AUS AROMATISCHEN GRUPPEN AUFWEISENDEN POLYMEREN SOWIE DIE DABEI ERHALTENEN FORMKÖRPER**
PROCESS FOR CHEMICALLY, HYDROPHILICALLY AND ANIONICALLY MODIFYING THE SURFACES OF MOULDED BODIES COMPOSED OF AROMATIC GROUPS-CONTAINING POLYMERS AND MODIFIED MOULDED BODIES THUS PRODUCED
PROCEDE DE MODIFICATION CHIMIQUE HYDROPHILE-ANIONIQUE DE SURFACES DE CORPS MOULES EN POLYMERES PRESENTANT DES GROUPES AROMATIQUES, ET DES CORPS MOULES MODIFIES AINSI OBTENUS

(30) Priorität: 24.07.1990 DE 4023524
(43) Veröffentlichungstag der Anmeldung: 12.05.1993
(73) Patentinhaber: SARTORIUS AG, 37075 Göttingen (DE)
(72) Erfinder: MELZNER, Dieter, D-3400 Göttingen (DE); NUSSBAUMER, Dietmar, D-3400 Göttingen (DE); RIEGER, Joachim, D-3407 Gleichen-Diemarden (DE)
(74) Vertreter: Müller-Boré & Partner Patentanwälte
(86) Internationale Anmeldenummer: EP9101385
(87) Internationale Veröffentlichungsnummer: WO9201735

(56) Entgegenhaltungen:
- US-A- 4 906 379
- STN International, File CA, Chemical Abstracts, volume 110, no. 14, 3 April 1989, (Columbus Ohio, US), Agarwal, A.K. et al: "Studies of the enhancement of separation characteristics of sulfonated poly(phenylene oxide)/polysulfone thin-film composite membranes for reverse-osmosis applications. I. Effect of chemical treatment", abstract 116128s, & Angew. Makromol. Chem., 163, 1-13
- STN International, File CA, Chemical Abstracts, volume 99, no. 18, 31 October 1983 (Columbus, Ohio, USA), Asahi Glass Co., Ltd.:"Reverse-osmosis membranes", abstract 141286d,
- Dialog Information Services, File 351, World patent Index 81-91, Dialog accession no. 003503498, (KURS) Kuraray KK: "Acid resistant separation membranes with external surfaces and internal surfaces of pores coated with furan resin"

## Beschreibung

Die Erfindung betrifft ein Verfahren zur chemischen hydrophil-anionischen Modifizierung von Oberflächen von Formkörpern aus aromatische Gruppen aufweisenden Polymeren, insbesondere porösen Formkörpern wie Membranen, welche zur Membranfiltration eingesetzt werden.

Aus aromatische Gruppen aufweisenden Polymeren hergestellte poröse Formkörper, welche für die Membranfiltration eingesetzt werden, wie Membranfilter, sind häufig hydrophob. Zur Durchführung von Filtrationen wässriger Medien sollen diese Formkörper jedoch von Wasser möglichst spontan benetzt werden, d.h. sie müssen zumindest an der Oberfläche hydrophil sein. Ferner ist es zweckmäßig, wenn derartige Formkörper auf ihren Oberflächen anionische Gruppen insbesondere Sulfonsäuregruppen aufweisen, da viele unter Einsatz von porösen Formkörpern abzutrennende Stoffe in Form von negativ geladenen Teilchen oder Kolloiden vorliegen, so daß durch Abstoßungseffekte die Ablagerung dieser Stoffe auf der porösen Formkörperoberfläche (Fouling) und eine damit verbundene Verblockung der porösen Formkörper verhindert wird.

Poröse Formkörper, wie Membranfilter, die aus aromatische Gruppen aufweisenden Polymeren erzeugt worden sind, beispielsweise aus Polysulfonen, Polyethersulfonen, Polyetherketonen, Polycarbonaten, aromatischen Polyamiden, aromatischen Polysulfonamiden, Polyxylylen, Polystyrol oder Gemischen aus diesen Polymeren oder Copolymerisaten, welche die genannten Polymeren enthalten, sind bekannt. Häufig sind diese porösen Formkörper hydrophob. Daß es, wie bereits ausgeführt wurde, in vielen Fällen zweckmäßig ist, die Oberflächen von hydrophoben porösen Formkörpern hydrophil zu machen bzw. mit anionischen Gruppen zu versehen, wobei häufig auch eine abgestufte Dichte dieser anionischen Gruppen angestrebt wird, hat es nicht an Versuchen gefehlt, derartige Formkörper an der Oberfläche in der gewünschten Weise zu modifizieren.

Ein bekanntes Verfahren, Membranfilter mit modifizierten Oberflächen herzustellen, besteht darin, die zur Herstellung der Membranfilter eingesetzten Polymeren vor der Membranherstellung in homogener Lösung zu modifizieren und dann zu Membranen zu verarbeiten. So beschreibt beispielsweise die DE-A-22 25 284 die Sulfonierung von Polysulfonen in homogener Lösung mit Chlorsulfonsäure und die anschliessende Verarbeitung zu Membranen, die für eine Umkehrosmose und Ultrafiltration eingesetzt werden. In diesem Falle ist jedoch das Membranfilter homogen modifiziert, d.h. die durch die Sulfonierung erzeugten hydrophilen Gruppen sind gleichmäßig in dem ganzen Membrankörper verteilt, was häufig nicht erwünscht ist.

In ähnlicher Weise sind aus "Eric Selegny (Ed), Charged Gels and Membranes I", S. 235-254 Membranen für die Ultrafiltration bekannt, die aus einem einheitlich sulfonierten vernetzten Polystyrol bestehen.

Nachteilig bei diesen bekannten Verfahren ist auch, daß die Modifizierung des Polymeren vor der einheitlichen Membranherstellung ein sehr aufwendiger Prozeß ist, der aus einer Sulfonierungsreaktion, Filtration, nachgeschalteten Umfällung, erneuten Filtration, mehreren Waschschritten und einer anschließenden Vakuumtrocknung besteht.

Eine direkte Sulfonierung der Oberfläche von Polysulfonformkörpern ist aus "J. Appl. Polym. Sci.", 20, S. 1885-1903 (1976) beschrieben. Nach diesem Verfahren erfolgt die Sulfonierung mit einem Schwefeltrioxid-Triethylphosphat-Komplex unter wasserfreien Bedingungen. Der Umgang mit Schwefeltrioxid und das Arbeiten unter wasserfreien Bedingungen machen dieses Verfahren für eine Durchführung in technischem Maßstab sehr aufwendig. Membranfilter sind nach diesem Verfahren bisher nicht sulfoniert worden.

Aus Angew. Makromol. Chem., 163, 1-13 ist die Vernetzung eines sulfonierten Polyphenylenoxids bekannt, das nach dem Diffusionsprinzip als trennaktive Substanz in einer Composit-Membran für die Umkehrosmose (reverse osmosis; RO) wirkt. Die Reaktion wird mit wäßriger Formaldehydlösung in Gegenwart einer verdünnten Säure als Katalysator durchgeführt.

Wenn die auf Seite 10, Zeilen 3 bis 7 von unten in diesem Dokument genannten Reaktionsbedingungen, nämlich Formaldehyd: 0,25 Gew.-%; Schwefelsäure: 0,25 Gew.-%; Gew.-Verhältnis Schwefelsäure/Formaldehyd: 1,0; Reaktionszeit: 5 bis 6 Stunden; Reaktionstemperatur: 22°C, eingehalten werden, soll eine RC-Composit-Membran mit erhöhter Salzrückhaltung bei gleicher Durchflußleistung erhalten werden.

Als Mechanismus wird eine Konkurrenzreaktion zwischen Vernetzung und Kettenabbau angenommen, wobei die Vernetzung mit zunehmender Reaktionszeit vorherrschend werden soll.

Eine oberflächliche Hydrophilisierung von Membranfiltern wird häufig unter Einsatz von Hilfsstoffen, wie Netzmitteln oder hydrophilen Polymeren, durchgeführt, wobei entweder die fertige Membran mit einer Lösung dieser Stoffe imprägniert wird oder diese der Gießlösung, aus welcher die Membranen erzeugt werden, zugesetzt werden. Der Nachteil dieser Modifizierung liegt darin, daß die auf diese Weise modifizierten Membranfilter gegenüber einem Auswaschen der hydrophilen Gruppen anfällig sind, was dazu führt, daß die Membranfilter nach einer bestimmten Zeit nicht mehr hydrophil sind, wobei außerdem die Gefahr besteht, daß unerwünschte Bestandteile in das Filtrat gelangen.

Es ist ferner bekannt, eine Oberflächenmodifizierung von Polymerkörpern in der Weise durchzuführen, daß die Oberflächen dieser Formkörper, beispielsweise die Oberflächen von Membranfiltern, mit Monomeren belegt werden, worauf eine Polymerisation unter Zusatz eines Vernetzungsmittels durchgeführt wird (vergl. EP-A-186 758). Wenn auch die Art dieser Modifizierung permanent ist, so ist sie dennoch mit dem Nachteil behaftet, daß im Falle von Membranfiltern durch die Belegung der Oberfläche eine Verkleinerung der mittleren Porengröße der Membranfilter erfolgt, die in der Regel unerwünscht ist. Außerdem ist es nicht möglich, mit diesem Verfahren eine Sulfonierung von Polymeroberflächen durchzuführen.

Die Erfindung hat sich die Aufgabe gestellt, ein einfaches und in wirtschaftlicher Weise durchführbares Verfahren zur chemischen, hydrophil-anionischen Modifizierung von Oberflächen von Formkörpern aus aromatische Gruppen aufweisenden Polymeren zu schaffen, mit dessen Hilfe es beispielsweise möglich ist, Membranfilter aus hydrophoben Polymeren, wie Polysulfon, an der Oberfläche zu hydrophilisieren, ohne daß dabei die chemischen, thermischen und mechanischen Eigenschaften der Polysulfonmatrix wesentlich verschlechtert werden.

Diese Aufgabe wird durch das Verfahren des Patentanspruchs 1 gelöst.

Bei Anwendung des erfindungsgemäßen Verfahrens ist es möglich, die chemische, hydrophil-anionische Modifizierung auf die Oberfläche der Fremdkörper, beispielsweise von Membranfiltern, zu beschränken, ohne daß dabei die chemischen, thermischen und mechanischen Eigenschaften der Polymermatrix verloren gehen, wobei im Falle von Membranfiltern auch nicht die Porengrößenverteilung derselben verändert wird. Bei Anwendung des erfindungsgemäßen Verfahrens ist es möglich, die Dichte der funktionellen Gruppen auf der Oberfläche innerhalb eines bestimmten Bereiches zu steuern.

Vorzugsweise bestehen die Formkörper, die nach dem erfindungsgemäßen Verfahren modifiziert sind, aus Membranfiltern, insbesondere mikroporösen Membranfiltern, die symmetrisch oder asymmetrisch sein können. Nach dem erfindungsgemäßen Verfahren können alle an sich bekannten Membranfilter modifiziert werden, die aus aromatische Gruppen aufweisenden Polymeren hergestellt worden sind. Als derartige Polymere seien Polysulfone, Polyethersulfone, Polyetherketone, Polycarbonate, aromatische Polyamide, aromatische Polysulfonamide, Polyxylole, Polystyrol, Gemische dieser Polymeren sowie Copolymere erwähnt, die unter Einsatz geeigneter Comonomerer erzeugt worden sind. Es werden solche Polymere eingesetzt, die mindestens ein substituierbares aromatisches Wasserstoffatom im Molekül aufweisen.

Besonders geeignet zur Durchführung des erfindungsgemäßen Verfahrens sind Formkörper aus Polymeren der allgemeinen Zusammensetzung

-Ar₁ -O-Ar₂ -SO₂ -Ar₂ -O-,

wobei Ar₁ und Ar₂ 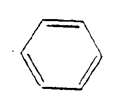
oder 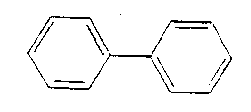
oder 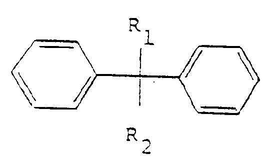
bedeuten, und
wobei R₁ und R₂ Alkylreste mit 1 bis 4 Kohlenstoffatomen sind.

In ganz besonders bevorzugter Weise werden nach dem erfindungsgemäßen Verfahren die Oberflächen von Formkörpern, insbesondere Membranfiltern, aus Polysulfonen oder Polyethersulfonen modifiziert.

Vorzugsweise wird das erfindungsgemäße Verfahren unter Einsatz von konzentrierter Schwefelsäure durchgeführt. Eine Schwefelsäure mit einer Konzentration von mehr als 90 %, insbesondere mehr als 95 %, wird bevorzugt.

Als Carbonylgruppen enthaltende Verbindungen kommen Formaldehyd, lineare oder cyclische Oligomere oder Polymere von Formaldehyd wie z.B. Trioxan oder Paraformaldehyd und andere Carbonylverbindungen in Frage, die von Schwefelsäure unter den Reaktionsbedingungen nicht zersetzt bzw. verkohlt werden, wobei insbesondere Formaldehyd und noch bevorzugter Paraformaldehyd eingesetzt werden. Bei Verwendung von Formaldehyd wird dieser vorzugweise in einer Konzentration in wässriger Lösung von 1 bis 36 Gew. %, und insbesondere von 30 bis 36 Gew.-% eingesetzt, und bei Verwendung von Paraformaldehyd wird dieser vorzugsweise in einer Konzentration von 5 bis 40 Gew.-% und insbesondere 10 bis 27 Gew.-% verwendet.

In zweckmäßiger Weise wird zur Durchführung des erfindungsgemäßen Verfahrens eine Lösung der Carbonylgruppen enthaltenden Verbindung, wie Paraformaldehyd oder Formaldehyd, in Schwefelsäure, insbesondere konzentrierter Schwefelsäure, verwendet.

Vorzugsweise liegt das Molverhältnis der Carbonylgruppen enthaltenden Verbindung zu der Schwefelsäure zwischen 1 : 5,6 und 1 : 0,45, besonders bevorzugt zwischen 1 : 2,65 und 1 : 1,25.

In zweckmäßiger Weise wird das erfindungsgemäße Verfahren einstufig durchgeführt, indem der zu modifizierende Formkörper, beispielsweise ein Membranfilter, in eine Lösung der carbonylgruppenhaltigen Verbindung in Schwefelsäure eingebracht wird. Es ist jedoch auch möglich, die Modifizierung zweistufig durchzuführen, indem der Formkörper zuerst mit einer Lösung der carbonylgruppenhaltigen Verbindung imprägniert und anschließend in Schwefelsäure eingebracht wird.

Vorzugsweise wird das erfindungsgemäße Verfahren kontinuierlich durchgeführt.

Der Mechanismus, nach dem die erfindungsgemäße Modifizierung erfolgt, ist noch nicht restlos aufgeklärt, es steht jedoch zu vermuten, daß vor oder parallel zur Sulfonierungsreaktion eine sehr schnelle, durch Schwefelsäure katalysierte Reaktion des Polymeren mit der carbonylgruppenhaltigen Verbindung abläuft, wobei sich z.B. bei der Verwendung von Paraformaldehyd primär Hydroxymethylgruppen an die aromatischen Kerne des Polymeren anlagern. Diese können unter Weiterreaktion mit weiteren aromatischen Kernen unter Ausbildung von Methylenbrücken oder mit weiteren Hydroxymethylgruppen unter Ausbildung von Etherbrücken reagieren und auf diese Weise eine Vernetzung des Polymeren herbeiführen, woraus sich die Beständigkeit gegenüber der Schwefelsäure erklärt.

Die Oberflächeneigenschaften der nach dem erfindungsgemäßen Verfahren modifizierten Formkörper, wie Membranfilter, werden also nach dieser Theorie durch nebeneinander vorliegende Sulfonsäuregruppen, Hydroxymethylgruppen und Ethergruppen bestimmt. Außerdem ergibt sich durch die Vernetzung eine verbesserte Lösungsmittelbeständigkeit, die je nach den Verfahrensbedingungen bis zur Unlöslichkeit der Formkörper in typischen Lösungsmitteln für beispielsweise Polysulfone, wie Dimethylacetamid, reichen kann.

Die beim einstufigen Verfahren verwendete Lösung der carbonylkomponente in Schwefelsäure wird bevorzugt bei kontrollierter Temperatur hergestellt und gelagert. Die Herstellungstemperatur beträgt -10 bis +40 °C, bevorzugt -10 bis +10 °C. Als Lagertemperatur wird bevorzugt die Herstellungstemperatur gewählt.

Das Alter der Reaktionslösung beeinflußt die Eigenschaften der erhaltenen Membranen insoweit, als mit längerer Lagerzeit der Lösung unter gleichen Reaktionsbedingungen die erreichte Hydrophilie und die Anzahl der Sulfonsäuregruppen ab- und die Vernetzung zunimmt. Daher wird die Reaktionslösung vorzugsweise innerhalb von 5 Tagen, bevorzugt innerhalb von 12 Stunden nach der Herstellung verwendet. Besonders vorteilhaft ist die Verwendung von frisch hergestellten Lösungen, in denen die Depolymerisation noch nicht abgeschlossen ist. Erkenntlich ist dieser Zustand daran, daß beim Aufheizen der Lösung exotherme Reaktion auftritt. Der Zeitraum, in dem dieser Zustand vorherrscht, dauert bei Herstellung der Lösungen bei tiefen Temperaturen über mehrere Stunden an.

Vorzugsweise wird die Reaktionslösung direkt vor der Verwendung von der Lagertemperatur auf die Verwendungstemperatur gebracht, wobei dann die Zeit bis zum Verbrauch zweckmäßig unter 30 Minuten gehalten wird. Die Verwendungstemperatur beträgt -5 bis +50 °C.

Die Reaktionszeit entspricht der Verweilzeit der Membran in der Lösung oder vorzugsweise der Verweilzeit an der Atmosphäre nach Imprägnieren mit der Lösung. Um Absorption von Luftfeuchtigkeit und dadurch bedingte Verdünnung bzw. Erwärmung der Reaktionslösung zu vermeiden, wird eine vorkonditionierte Atmosphäre von max. 40 % rel. Feuchte, vorzugsweise 20 % rel. Feuchte angewandt. Die Kontaktzeit kann 10 s bis 10 min betragen. Sie wird in Abhängigkeit zur Temperatur der Reaktionslösung gewählt und beträgt von 2 bis 10 min bei einer Temperatur der Reaktionslösung von 0 °C, oder 10 bis 120 s bei 40 °C. Die Reaktionslösung wird direkt vor der Verwendung von der Lagertemperatur auf die Verwendungstemperatur gebracht, wobei die Zeit bis zum Verbrauch bevorzugt unter 30 min gehalten wird. Die Verwendungstemperatur der Reaktionslösung beträgt -5°C bis 50 °C.

Die Dichte der funktionellen Gruppen wird im wesentlichen über die Wahl der Kontaktzeit, der Behandlungstemperatur und der Konzentration von Carbonylkomponente und der Schwefelsäure eingestellt, wobei Verlängerung der Kontaktzeit, Erhöhen von Temperatur und Konzentration der Schwefelsäure und Absenken der Konzentration der Paraformaldehydekonzentration eine Erhöhung der Gruppendichte bewirken.

Die Reaktion wird durch Verdünnen der Reaktionslösung mit einem geeigneten Verdünnungsmittel, in zweckmäßiger Weise Wasser, beendet, falls die Reaktion durch Eintauchen. des zu modifizierenden Formkörpers in die Reaktionslösung durchgeführt wird.

Nach Beendigung der Reaktion wird der modifizierte Formkörper vorzugsweise einer Nachbehandlung unterzogen, die beispielsweise aus einem Auskochen, Behandeln mit Wasserdampf, Behandeln mit sauren oder alkalischen Lösungen oder Erhitzen bestehen kann, wobei vorzugsweise eine Behandlung mit einer alkalischen wasserstoffperoxidhaltigen Lösung vorgesehen ist, wobei die Lösung einen pH-Wert von >11 und vorzugsweise von 12 aufweist.

Eine weitere Modifikation der modifizierten Formkörper ist in einer nachgeschalteten Reaktion erhältlich, wobei sie z.B. in Gegenwart eines sauren Katalysators wie z.B. p-Toluolsulfonsäure mit hydroxylgruppenhaltigen Verbindungen, carbonylgruppenhaltigen Verbindungen, kondensierbare Aromaten oder anderen mit den auf den Formkörpern vorhandenen Gruppen Reaktionen eingehenden Verbindungen zur Reaktion gebracht werden, wobei diese Reaktion sowohl in Lösung als auch nach Imprägnierung mit dem Reaktionsgemisch bei höherer Temperatur durchgeführt werden kann.

Eine mikroporöse Membran, deren Oberfläche mit einem Verfahren gemäß der vorliegenden Erfindung hydrophilanionisch modifiziert wurde, weist typischerweise eine, wie nachstehend definierte, Benetzungszeit von weniger als 10 s, eine Saugzeit von weniger als 100 s, eine Methylenblauaufnahme von 10 bis 50 µg/cm² und eine Vernetzung von 10 bis 95 % auf.

Die folgenden Beispiele zeigen die Modifizierung mikroporöser Membranen und erläutern die Erfindung.

### Beispiel 1

Eine Reaktionslösung wird hergestellt, indem 17,5 kg Paraformaldehyd in 70 kg 98 %iger Schwefelsäure bei 10°C gelöst werden. Die Lösung wird anschließend auf dieser Temperatur gehalten. Für die Durchführung der Modifizierung wird die frisch hergestellte Reaktionslösung auf 45°C aufgeheizt und eine Polysulfonmembran mit einer mittleren Porengröße von 0,2 µm mit dieser Lösung imprägniert. Nach 120 s wird die Membran in ein mit Wasser gefülltes Bad geleitet und anschließend 240 s lang in einem weiteren Bad mit 0,5 %iger Wasserstoffperoxidlösung bei pH=12 behandelt.

Dann wird die Membran 30 min lang mit entionisiertem Wasser gewaschen und bei 60°C getrocknet.

Der Vernetzungsgrad der modifizierten Membran wird bestimmt, indem eine bei 105°C getrocknete Probe von 60 mg über eine Zeit von 30 min bei Raumtemperatur in 30 ml Dimethylacetamid (DMAc) geschüttelt, über ein gewogenes Filter filtriert und zweimal mit je 20 ml DMAc und einmal mit 50 ml Ethanol gewaschen wird. Anschließend wird das Filter mit dem Rückstand 2 h lang bei 130 °C getrocknet und ausgewogen. Der Vernetzungsgrad wird als nichtlöslicher Anteil in % vom Ausgangsgewicht der Probe angegeben. Er beträgt 91 %.

Die Menge der anionischen Gruppen wird über die Aufnahme von Methylenblau bestimmt. Dazu wird eine gewogene Membran 15 min lang in 1 n HCL eingelegt, dann mit entionisiertem Wasser neutral gewaschen, und in 5 ml einer 0.01 n HCL eingelegt. Dazu wird 1 ml einer Lösung von 0.01 % Methylenblau in 0.01 n HCL gegeben und geschüttelt, wobei jeweils bei Entfärbung der Lösung ein weiterer Milliliter der Farbstofflösung hinzugegeben wird. Ist die Farbstoffaufnahme beendet, wird der Methyenblaugehalt im Überstand photometrisch bestimmt und aus der insgesamt zugegebenen Menge die Methylenblauaufnahme berechnet. Sie beträgt 91 µg/cm². Bei einer unbehandelten Membran ist die Methylenblauaufnahme < 5 µg/cm².

Das Benetzungsverhalten wird bestimmt, indem auf die bei 105 °C getrocknete Membran ein 10 µl Tropfen entionisiertes Wasser gegeben wird und die Zeiten ermittelt werden, in der die vom Tropfen bedeckte Fläche benetzt (Benetzungszeit) und der Tropfen vollständig von der Membran aufgesaugt wird (Saugzeit). Ist die Benetzungszeit kleiner als 1 s, wird die Benetzung als spontan bezeichnet. Die Probe benetzte spontan, die Saugzeit betrug 7 s.

### Beispiel 2

Eine frische Reaktionslösung nach Beispiel 1 wird auf 37 °C aufgeheizt und eine Polysulfonmembran mit einer mittleren Porengröße von 0.2 µm mit der Lösung imprägniert. Nach 120 s wird die Membran in ein mit Wasser gefülltes Bad geleitet und anschließend 240 s lang in einem weiteren Bad mit 0.5-prozentiger Wasserstoffperoxidlösung bei pH=12 behandelt. Dann wird die Membran 30 min lang mit entionisiertem Wasser gewaschen und bei 60 °C getrocknet. Die Probe ist zu 91 % vernetzt, die Methylenblauaufnahme beträgt 131 µg/cm², die Benetzung erfolgt spontan bei einer Saugzeit von 11 s.

### Beispiel 3

Eine frische Reaktionslösung nach Beispiel 1 wird auf 23 °C aufgeheizt und eine Polysulfonmembran mit einer mittleren Porengröße von 0.2 µm mit der Lösung imprägniert. Nach 240 s wird die Membran in ein mit Wasser gefülltes Bad geleitet und anschließend 480 s in einem weiteren Bad mit 0.5-prozentiger Wasserstoffperoxidlösung bei pH=12 behandelt. Dann wird die Membran 30 min lang mit entionisiertem Wasser gewaschen und bei 60 °C getrocknet. Die Probe hat folgende Eigenschaften: Vernetzung 61 %, Methylenblauaufnahme 54 µg/cm², Benetzung spontan, Saugzeit 15 s.

### Beispiel 4

Eine frische Reaktionslösung nach Beispiel 1 wird auf 26 °C aufgeheizt und eine Polysulfonmembran mit einer mittleren Porengröße von 0.2 µm mit der Lösung imprägniert. Nach 120 s wird die Membran in ein mit Wasser gefülltes Bad geleitet und anschließend 240 s lang in einem weiteren Bad mit 0.5-prozentiger Wasserstoffperoxidlösung bei pH=12 behandelt. Dann wird die Membran 30 min lang mit entionisiertem Wasser gewaschen und bei 60 °C getrocknet. Die Probe hat folgende Eigenschaften: Vernetzung 27 %, Methylenblauaufnahme 51 µg/cm², Benetzung spontan, Saugzeit 29 s.

### Beispiel 5

Eine Reaktionslösung, hergestellt durch Lösen von 28,6 kg Paraformaldehyd in 71,4 kg 98-prozentiger H₂ SO bei 10 °C, und 4 Tage bei der gleichen Temperatur gelagert, wird auf 40 °C aufgeheizt und eine Polysulfonmembran mit einer mittleren Porengröße von 0.45 µm mit einer Lösung imprägniert. Nach 480 s wird die Membran in ein mit Wasser gefülltes Bad geleitet und anschließend 960 s lang in einem weiteren Bad mit 0,5-prozentiger Wasserstoffperoxidlösung bei pH=12 behandelt. Dann wird die Membran 30 min lang mit entionisiertem Wasser gewaschen und bei 60 °C getrocknet. Die Probe hat folgende Eigenschaften: Vernetzung 25 %, Methylenblauaufnahme 17 µg/cm² , Benetzung spontan, Saugzeit 32 s.

### Beispiel 6

Eine Reaktionslösung nach Beispiel 5 wird auf 39 °C aufgeheizt und eine Polysulfonmembran mit einer mittleren Porengröße von 0.45 µm mit der Lösung imprägniert. Nach 180 s wird die Membran in ein mit Wasser gefülltes Bad geleitet und anschließend 360 s lang in einem weiteren Bad mit 0.5-prozentiger Wasserstoffperoxidlösung bei pH=12 behandelt. Dann wird die Membran 30 min lang mit entionisiertem Wasser gewaschen und bei 60 °C getrocknet. Die Probe hat folgende Eigenschaften: Vernetzung 16 %, Methylenblauaufnahme 17 µg/cm² , Benetzung 1 s, Saugzeit 48 s.

### Beispiel 7

Eine Reaktionslösung, hergestellt durch Lösen von 14.3 kg Paraformaldehyd in 85,7 kg 98-prozentiger H₂ SO₄ bei 25 °C wird 1 Tag bei der gleichen Temperatur gelagert. Dann wird eine Polysulfonmembran mit einer mittleren Porengröße von 0.2 µm mit einer Lösung imprägniert. Nach 30 s wird die Membran in ein mit Wasser gefülltes Bad geleitet und anschließend 60 s lang in einem weiteren Bad mit 0,5-prozentiger Wasserstoffperoxidlösung bei pH=12 behandelt. Dann wird die Membran 30 min lang mit entionisiertem Wasser gewaschen und bei 60 °C getrocknet. Die Probe hat folgende Eigenschaften: Vernetzung 70 %, Methylenblauaufnahme 12 µg/cm², Benetzung spontan, Saugzeit 14 s.

### Beispiel 8

Eine Reaktionslösung nach Beispiel 7 wird auf 2 °C gekühlt und eine Polysulfonmembran mit einer mittleren Porengröße von 0.2 µm mit der Lösung imprägniert. Nach 60 s wird die Membran in ein mit Wasser gefülltes Bad geleitet und anschließend 120 s lang in einem weiteren Bad mit 0.5-prozentiger Wasserstoffperoxidlösung bei pH=12 behandelt. Dann wird die Membran 30 min lang mit entionisiertem Wasser gewaschen und bei 60 °C getrocknet. Die Probe hat folgende Eigenschaften: Vernetzung 47 %, Methylenblauaufnahme 18 µg/cm², Benetzung spontan, Saugzeit 9 s.

### Beispiel 9

Eine Reaktionslösung, hergestellt durch Lösen von 10 kg Paraformaldehyd in 90 kg 98-prozentige H₂ SO₄ bei 25 °C, und bei der gleichen Temepratur gelagert, wird auf -2 °C gekühlt und eine Polysulfonmembran mit einer mittleren Porengröße von 0.2 µm mit der Lösung imprägniert. Nach 32 s wird die Membran in ein mit Wasser gefülltes Bad geleitet und anschließend 60 s lang in einem weiteren Bad mit 0,5-prozentiger Wasserstoffperoxidlösung bei pH=12 behandelt. Dann wird die Membran 30 min lang mit entionisiertem Wasser gewaschen und bei 60 °C getrocknet. Die Probe hat folgende Eigenschaften: Vernetzung 83 %, Methylenblauaufnahme 10 µg/cm² , Benetzung spontan, Saugzeit 98 s.

## Patentansprüche

1. Verfahren zur Herstellung von Formkörpern aus aromatische Gruppen aufweisenden Polymeren mit chemisch, hydrophil-anionisch modifizierten Oberflächen, dadurch gekennzeichnet, daß die aromatische Gruppen aufweisenden Polymere Polysulfone, Polyethersulfone, Polyetherketone, Polycarbonate, aromatische Polyamide, aromatische Polysulfonamide, Polyxylole, Polystyrole oder Gemische oder Copolymere davon sind, wobei die aromatische Gruppen aufweisenden Polymere mindestens ein substituierbares aromatisches Wasserstoffatom im Molekül aufweisen, die Oberflächen der Formkörper mit einer Carbonylgruppen enthaltenden Verbindung, nämlich Formaldehyd, lineare oder cyclische Oligomere oder Polymere von Formaldehyd, und konzentrierter Schwefelsäure mit einer Konzentration oberhalb 90% bei einer Temperatur von -5 bis +50°C und einer Reaktionszeit von 10 Sekunden bis 10 Minuten, wobei das Molverhältnis der carbonylgruppenhaltigen Verbindung zu der Schwefelsäure 1:5,6 bis 1:0,45 beträgt, zur Umsetzung gebracht werden.

2. Verfahren nach Anspruch 1, dadurch gekennzeichnet, daß die Formkörper aus Membranfiltern bestehen.

3. Verfahren nach Anspruch 2, dadurch gekennzeichnet, daß die Formkörper aus mikroporösen Membranfiltern bestehen.

4. Verfahren nach einem der Ansprüche 1 bis 3, dadurch gekennzeichnet, daß die aromatische Gruppen aufweisenden Polymere Polymere oder Copolymere der allgemeinen Zusammensetzung
-Ar₁ -O-Ar₂ -SO₂ -Ar₂ -O-
sind, wobei Ar₁ und Ar₂ 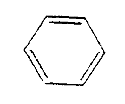 oder 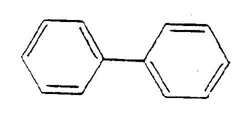 oder 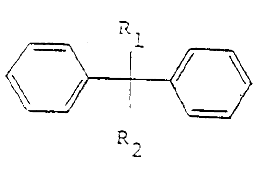 bedeuten, und
wobei R₁ und R₂ Alkylreste mit 1 bis 4 Kohlenstoffatomen sind.

5. Verfahren nach Anspruch 4, dadurch gekennzeichnet, daß die aromatische Gruppen aufweisenden Polymere Polysulfone oder Polyethersulfone sind.

6. Verfahren nach einem der vorhergehenden Ansprüche, dadurch gekennzeichnet, daß die Konzentration der Schwefelsäure vorzugsweise oberhalb 95% liegt.

7. Verfahren nach einem der vorhergehenden Ansprüche, dadurch gekennzeichnet, daß die carbonylgruppenhaltige Verbindung Formaldehyd ist, der in einer Konzentration von 1 bis 36 Gew.-% und insbesondere 30 bis 36 Gew.-% verwendet wird, oder Paraformaldehyd ist, der in einer Konzentration von 5 bis 40 Gew.-% und insbesondere 10 bis 27 Gew.-% verwendet wird.

8. Verfahren nach einem der vorhergehenden Ansprüche, dadurch gekennzeichnet, daß die Umsetzung einstufig unter Verwendung einer Lösung der carbonylgruppenhaltigen Verbindung in der Schwefelsäure durchgeführt wird.

9. Verfahren nach einem der Ansprüche 1 bis 7, dadurch gekennzeichnet, daß die Umsetzung zweistufig in der Weise durchgeführt wird, daß der zu modifzierende Formkörper zuerst mit einer Lösung der carbonylgruppenhaltigen Verbindung imprägniert und dann mit der Schwefelsäure in Kontakt gebracht wird.

10. Verfahren nach einem der vorhergehenden Ansprüche, dadurch gekennzeichnet, daß es kontinuierlich durchgeführt wird.

11. Verfahren nach einem der vorhergehenden Ansprüche, dadurch gekennzeichnet, daß die modifizierten Formkörper einer Nachbehandlung durch Auskochen, Behandeln mit Wasserdampf, Behandeln mit sauren oder alkalischen Lösungen oder Erhitzen unterzogen werden.

12. Verfahren nach Anspruch 13, dadurch gekennzeichnet, daß die Nachbehandlung mit einer alkalischen wasserstoffperoxidhaltigen Lösung mit einem pH-Wert von >11 durchgeführt wird, vorzugsweise etwa pH=12.

13. Mikroporöse Membran mit einer gemäß einem Verfahren nach einem der Ansprüche 1 bis 12 hydrophil-anionisch modifizierten Oberfläche, gekennzeichnet durch eine Benetzungszeit von weniger als 10 Sekunden, eine Saugzeit von weniger als 100 Sekunden, eine Methylenblauaufnahme von 10 bis 500 µg/cm² und eine Vernetzung von 10 bis 95 %.

## Claims

1. A process for the production of moldings made from aromatic group-containing polymers and having surfaces with chemical hydrophilic-anionic modifications, characterized in that the polymers having aromatic groups are polysulfones, polyethersulfones, polyetherketones, polycarbonates, aromatic polyamides, aromatic polysulfonamides, polyxylenes, polystyrenes or mixtures or copolymers thereof, the polymers having aromatic groups having at least one substitutable aromatic hydrogen atom in the molecule, the surfaces of the moldings being reacted with a carbonyl group-containing compound, namely formaldehyde, linear or cyclic oligomers or polymers of formaldehyde, and concentrated sulfuric acid having a concentration of more than 90 % at a temperature of -5 to +50 °C and a reaction period of 10 seconds to 10 minutes, the mole ratio of the carbonyl group-containing compound to sulfuric acid being 1:5.6 to 1:0.45.

2. The process according to claim 1, characterized in that the moldings consist of membrane filters.

3. The process according to claim 2, characterized in that the moldings consist of microporous membrane filters.

4. The process according to any one of claims 1 to 3, characterized in that the polymers having aromatic groups are polymers or copolymers of the general composition
-Ar₁-O-Ar₂-SO₂-Ar₂-O-
wherein Ar₁ and Ar₂ are 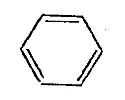 or 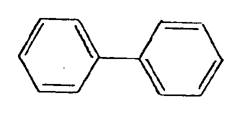 or 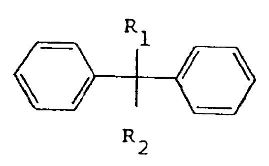 and
wherein R₁ and R₂ are alkyl residues having 1 to 4 carbon atoms.

5. The process according to claim 4, characterized in that the polymers having aromatic groups are polysulfones or polyethersulfones.

6. The process according to any one of the preceding claims, characterized in that the concentration of the sulfuric acid is preferably above 95 %.

7. The process according to any one of the preceding claims, characterized in that the carbonyl group-containing compound is formaldehyde used in a concentration of 1 to 36 % by weight and particularly 30 to 36 % by weight or paraformaldehyde used in a concentration of 5 to 40 % by weight and particularly 10 to 27 % by weight.

8. The process according to any one of the preceding claims, characterized in that the reaction is carried out in one stage using a solution of the carbonyl group-containing compound in sulfuric acid.

9. The process according to any one of claims 1 to 7, characterized in that the reaction is carried out in two stages in such a way that the molding to be modified is first impregnated with a solution of the carbonyl group-containing compound and then contacted with sulfuric acid.

10. The process according to any one of the preceding claims, characterized in that it is carried out continously.

11. The process according to any one of the preceding claims, characterized in that the modified moldings are subjected to an after-treatment by boiling-out, steaming, treatment using acidic or alkaline solutions or heating.

12. The process according to claim 13, characterized in that the after-treatment is carried out with an alkaline solution containing hydrogen peroxide and having a pH value of > 11, preferably about pH = 12.

13. A microporous membrane with hydrophilic-anionic modification of its surface according to a process of any one of claims 1 to 12, characterized by a wetting period of less than 10 seconds, an absorption period of less than 100 seconds, a methylene blue absorption of 10 to 500 µg/cm² and a cross-linkage of 10 to 95 %.

## Revendications

1. Procédé de fabrication de corps moulés en polymères présentant des groupes aromatiques, à surfaces modifiées de manière chimique hydrophile-anionique, caractérisé en ce que les polymères présentant des groupes aromatiques sont des polysulfones, polyéthersulfones, polyéthercétones, polycarbonates, polyamides aromatiques, polysulfonamides aromatiques, polyxylènes, polystyrènes ou des mélanges ou copolymères de ceux-ci, les polymères présentant des groupes aromatiques présentant dans la molécule au moins un atome d'hydrogène aromatique substituable, les surfaces des corps moulés étant transformées à l'aide d'une liaison contenant des groupes carbonyle, notamment formaldéhyde, oligomères ou polymères linéaires ou cycliques de formaldéhyde, et d'acide sulfurique concentré à concentration supérieure à 90% à une température de -5 à +50°C et un temps de réaction de 10 secondes à 10 minutes, le rapport molaire entre la liaison contenant des groupes carbonyle et l'acide sulfurique étant de 1:5,6 à 1:0,45.

2. Procédé suivant la revendication 1, caractérisé en ce que les corps moulés consistent en des filtres à membrane.

3. Procédé suivant la revendication 2, caractérisé en ce que les corps moulés consistent en des filtres à membrane microporeuse.

4. Procédé suivant l'une des revendications 1 à 3, caractérisé en ce que les polymères présentant des groupes aromatiques sont des polymères ou copolymères à la composition générale
-Ar₁-O-Ar₂-SO₂-Ar₂-O-
Ar₁ et Ar₂ représentant 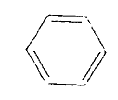 ou 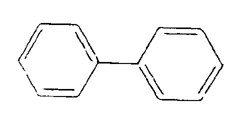 ou 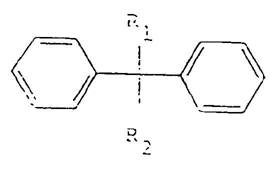 et R₁ et R₂ étant des restes alcoyle avec de 1 à 4 atomes de carbone.

5. Procédé suivant la revendication 4, caractérisé en ce que les polymères présentant des groupes aromatiques sont des polysulfones ou polyéthersulfones.

6. Procédé suivant l'une des revendications précédentes, caractérisé en ce que la concentration de l'acide sulfurique est de préférence supérieure à 95%.

7. Procédé suivant l'une des revendications précédentes, caractérisé en ce que la liaison contenant des groupes carbonyle est du formaldéhyde qui est utilisé à une concentration de 1 à 36% en poids et, en particulier, de 30 à 36% en poids ou du paraformaldéhyde qui est utilisé à une concentration de 5 à 40% en poids et, en particulier, de 10 à 27% en poids

8. Procédé suivant l'une des revendications précédentes, caractérisé en ce que la transformation est réalisée en une seule étape à l'aide d'une solution de la liaison contenant des groupes carbonyle dans l'acide sulfurique.

9. Procédé suivant l'une des revendications 1 à 7, caractérisé en ce que la transformation est réalisée en deux étapes, de manière que le corps moulé à modifier est tout d'abord imprégné d'une solution de la liaison contenant des groupes carbonyle et est ensuite mis en contact avec l'acide sulfurique.

10. Procédé suivant l'une des revendications précédentes, caractérisé en ce qu'il est réalisé en continu.

11. Procédé suivant l'une des revendications précédentes, caractérisé en ce que les corps moulés modifiés sont soumis à un traitement ultérieur par cuisson, traitement à la vapeur d'eau, traitement par solutions acides ou alcalines ou échauffement.

12. Procédé suivant la revendication 11, caractérisé en ce que le traitement ultérieur par une solution alcaline contenant du péroxyde d'hydrogène est réalisé à un pH de > 11, de préférence d'environ pH=12.

13. Membrane microporeuse à surface modifiée de manière hydrophile-anionique selon un procédé suivant l'une des revendications 1 à 12, caractérisée par un temps d'humidification de moins de 10 secondes, un temps de succion de moins de 100 secondes, une absorption de bleu de méthylène de 10 à 500 µg/cm² et une réticulation de 10 à 95%.
